# EUROPÄISCHE PATENTSCHRIFT

(11) **EP 3 121 520 B1**
(45) Veröffentlichungstag und Bekanntmachung des Hinweises auf die Patenterteilung: **26.09.2018**
(21) Anmeldenummer: 15178353.7
(22) Anmeldetag: 24.07.2015
(51) Int. Cl.: F28D 1/047, F28F 1/14, F24D 3/16, F24D 3/14

(54) **WÄRMETAUSCHER**
HEAT EXCHANGER
ÉCHANGEUR THERMIQUE

(43) Veröffentlichungstag der Anmeldung: 25.01.2017
(73) Patentinhaber: KST AG, 8840 Einsedeln (CH)
(72) Erfinder: Schönbächler, Beat, 8840 Einsiedeln (CH); Müller, Remo, 8752 Näfels (CH)
(74) Vertreter: OK pat AG

(56) Entgegenhaltungen:
- EP-A1- 0 764 818
- EP-A1- 2 145 719
- EP-A1- 2 565 338
- DE-A1- 3 010 932
- DE-U1-202009 000 717
- DE-U1-202013 102 640

## Beschreibung

Die vorliegende Erfindung betrifft einen Wärmetauscher nach Anspruch 1. Solche Wärmetauscher können zum Kühlen/Heizen von Räumen oder ganzen Gebäuden in der Form von Decken- oder Wandpanelen oder auch direkt in der Decke oder Wand eingesetzt werden.

Grundsätzlich sind verschiedene Wärmeaustauscher aus dem Stand der Technik bekannt, jedoch kommt es bei solchen Wärmetauschern, auf Grund zumindest teilweiser schlechter thermischer Leitung zwischen Wärmeaustauschelement und der in den Raum gerichteten Kühl-/Wärmefläche des Wärmetauschers zu einem mangelhaften Wärmetausch und somit zu schlechten Übertragungswerten, weshalb bspw. in der DE 10 2013 209 961 B4 vorgeschlagen wird ein zusätzliches Wärmeleitelement zu verwenden.

Des Weiteren sind bei bekannten Wärmetauschern für Raumkühlung bzw. Heizung oft zusätzliche akustisch dämpfende Eigenschaften gewünscht, die bspw. durch Lochungen in der Vorderwand, kombiniert mit möglichst grossflächig auf der Rückseite der Vorderwand ausgelegten akustischem Dämmmaterial verbessert werden können. Da die Rückseite gleichzeitig die innere Wärmeaustauschfläche des Wärmetauschers bildet, die beispielsweise mit der Platte eines Wärmeaustauschelements, das mit einem Kühl- /Heizwasser transportierenden Rohr wirkverbunden ist, zusammenwirkt, steht die akustisch nutzbare Fläche mit der zur Kühlung mit dem Wärmeaustauschelement nutzbaren Fläche in Konkurrenz. Weshalb die Kühl-/Heizleistung einerseits und/oder die akustischen Eigenschaften bekannter Wärmetauscher sich gegenseitig beschränken.

Bekannt ist es des Weiteren bei Wärmeaustauschelementen spezielle Strangpressprofile als Rohrträger bzw. Plattenelemente einzusetzen. Solche Profile sind jedoch nur für bestimmte Anwendungen ausgelegt und in der Herstellung, insbesondere für kleinere Stückzahlen sehr teuer. Auch erhöht sich durch die verhältnismässig grossen Abmessungen solcher Plattenelemente das Gesamtgewicht und Grösse der Wärmetauscher, was Installationsaufwand und Kosten des Wärmetauschers erhöht.

Ziel der vorliegenden Anmeldung ist es zumindest einen der vorgenannten Nachteile des Standes der Technik zu verbessern.

Ein solcher Wärmetauscher umfasst eine Vorderwand zur Aufnahme von Umgebungswärme und thermischer Weiterleitung der Umgebungswärme an ein mit einem Wärmeaustauschfluid durchströmbares Rohr oder/und Aufnahme von Heizwärme aus dem Rohr und Abgabe der Heizwärme an die Umgebung, wobei die Vorderwand eine innere Wärmeaustauschfläche A_{wi} und eine gegenüberliegende äussere Wärmeaustauschfläche umfasst.

Das Rohr ist dabei auf der inneren Wärmeaustauschfläche A_{wi} oder/und auf zumindest einem Plattenelement, mit einer in thermisch leitendem Kontakt mit der inneren Wärmeaustauschfläche A_{wi} stehenden Anpressfläche, angeordnet. Zusätzlich ist ein Kontaktmittel zur thermischen Kontaktierung des Rohrs mit der inneren Wärmeaustauschfläche A_{wi} oder/und dem Plattenelement einerseits und dem Rohr andererseits vorgesehen, wobei das Kontaktmittel ein Verbindungsmittel oder/und Anpressmittel umfasst. Bei einem erfindungsgemässen Wärmetauscher ist dabei die innere Wärmeaustauschfläche A_{wi} im Bereich einer Wärmeaustauschkontaktfläche oder/und das zumindest eine Plattenelement im Bereich einer Plattenelementkontaktfläche an eine Rohrkontaktfläche mittels einer Passung, mit einer gegenüber der Plattendicke D des Plattenelements verringerten Materialdicke d, angepasst um die Kontaktflächen zu vergrössern. Das Rohr kann daher im Wärmetauscher zusätzlich oder statt auf der Wärmeaustauschfläche A_{wi}, auch oder nur auf der Rückseite, also der Anpressfläche gegenüberliegenden Seite des Plattenelements angeordnet sein. Ein Plattenelement mit einem auf seiner Rückseite angeordneten Rohr bildet dabei ein Wärmeaustauschelement. Alternativ kann ein Wärmeaustauschelement aus einem Rohr und zwei im unteren, bzw. der Wärmeaustauschfläche zugewandten Bereich seitlich bevorzugt seitensymmetrisch angeordneten Plattenelementen aufgebaut sein. Zumindest für eine fakultative Herstellung einer Klebe- oder Lotverbindung eines Wärmeaustauschelements mit dem Wärmetauscher, kann die Anpressfläche kurzzeitig an die innere Wärmeaustauschfläche der Vorderwand angepresst werden.

Alternativ kann auch, zumindest während des Betriebs des Wärmetauschers, eine dauerhafte mechanische Pressung anstatt oder zusätzlich zu einer dauerhaften Verbindung vorgesehen sein, um den Wärmeaustausch zwischen Vorderwand und Plattenelement bzw. Rohr und gegenüberliegender Kontaktfläche, d.h. Wärmeaustauschkontaktfläche der Wärmeaustauschfläche A_{wi} oder/und Plattenelementkontaktfläche des Plattenelements, zu verbessern. Dazu genügt bei Materialien mit elastischen und/oder duktilen Eigenschaften wie bspw. Aluminium, das bevorzugt für die Vorderwand und Plattenelement, bzw. Kupfer, das bevorzugt für das Rohr verwendet wird, ein leichtes Andrücken, wie es beispielsweise auch mit einem Klemmverschluss möglich ist.

In einer bevorzugten Ausführungsform umfasst ein erfindungsgemässer Wärmetauscher ein Gehäuse mit zumindest einer, bevorzugt umlaufenden, beispielsweise als Sichtschutz geschlossenen Seitenwand und einer Vorderwand, die die innere Wärmeaustauschfläche, zum Wärmeaustausch mit dem Rohr oder/und dem Wärmeaustauschelement, und gegenüberliegende äussere Wärmeaustauschfläche, zum Wärmeaustausch mit der Umgebung, umfasst. Dabei können Anpressmittel zum Anpressen des Rohrs und/oder des Wärmeaustauschelements an die innere Wärmeaustauschfläche vorgesehen sein. Die Anpressmittel können dabei eine Rückwand und/oder eine mit der Seitenwand, dabei insbesondere mit dem hinteren Bereich der Seitenwand zusammenwirkende Klemmvorrichtung, beispielsweise in der Arte eines Bajonettverschlusses umfassen.

Des Weiteren kann auf einem Teilbereich der inneren Wärmeaustauschfläche A_{wi} zwischen dem(n) Rohr(en) oder/und den Plattenelementen, insbesondere auf einer Freifläche ein akustischer Dämpfer angeordnet sein. Als Freifläche wird hier die Fläche der inneren Wärmeaustauschfläche A_{wi} verstanden, die nicht mit einer Anpress- bzw. Kontaktfläche fläche eines Plattenelements oder des Rohrs in Kontakt ist. Der akustische Dämpfer kann dabei eine oder mehrere Matten aus Vliesmaterial und/oder eine Loch- oder Gitterplatte umfassen.

Die Vorderwand und/oder das Plattenelemente können dabei Rundlöcher aufweisen um die akustischen Eigenschaften des Wärmetauschers zu verbessern.

Diese könne auf der inneren Wärmeaustauschfläche A_{wi}, insbesondere bevorzugt auf der Freifläche, bzw. auf der Rückseite, also der Anpressfläche gegenüberliegenden Seite des Plattenelements gebördelt sein um die akustischen Eigenschaften noch weiter zu verbessern.

Um eine mechanische Anpassung der Vorderwand bzw. deren innerer Wärmeaustauschfläche A_{wi} oder/und des Plattenelements zu vereinfachen oder eventuell ganz zu vermeiden, kann das Rohr zumindest eine im Querschnitt zumindest teilweise ebene Rohrkontaktfläche aufweisen, womit die Kontaktflächen auf einfache Weise vergrössert werden können.

Je nach Wärmeaustauschbedarf kann dabei ein oder mehrere Rohre mäandrierend mit der inneren Wärmeaustauschfläche A_{wi} oder/und mit dem Plattenelement wirkverbunden sein. Bei einer Wirkverbindung mit dem Plattenelement können die gekrümmten Rohrabschnitte bevorzugt ausserhalb der Kontaktflächen liegen, daher das oder die Plattenelemente seitlich überragen, was eine mechanische Anpassung der Kontaktflächen erleichtert. Unter Wirkverbindung wird hier eine thermisch leitende Anordnung zwischen Rohr bzw. Rohrkontaktfläche und gegenüberliegender Kontaktfläche verstanden die durch physische, leitende Verbindungsmittel (Lot, Kleber, Schweissung) oder Anpressen einer Kontaktfläche auf die andere hergestellt wird.

Die Passung für Plattenelement oder/und innerer Wärmeaustauschfläche kann dabei im Randbereich oder im gesamten Querschnitt kreissegmentförmig sein und wird bevorzugt mit einer Tiefe von 0.3 bis 1.5 mm oder 2 bis 12% des Aussendurchmesser des Rohrs, dabei bevorzugt von 0.6 bis 1 mm oder 5 bis 8% des Aussendurchmesser des Rohrs ausgeführt. Alternativ oder zusätzlich kann die Passung 33 eine ebene Fläche umfassen oder als ebene Fläche ausgebildet sein. Die mittlere Rauheit der Kontaktflächen wird dabei auf einen Rₐ-Bereich von 0.05 bis 2.0 µm, bevorzugt von 0.1 bis 1 µm eingestellt. Analog zu dem vorhergehend Beschriebenen kann die Passungen 33 für ein direkt mit der inneren Wärmeaustauschfläche A_{wi} (21) der Vorderwand 10 verbundenes Rohr 4 ausgebildet sein und dabei die Wärmeaustauschkontaktfläche zur Kontaktierung der Rohrkontaktfläche 3 umfassen.

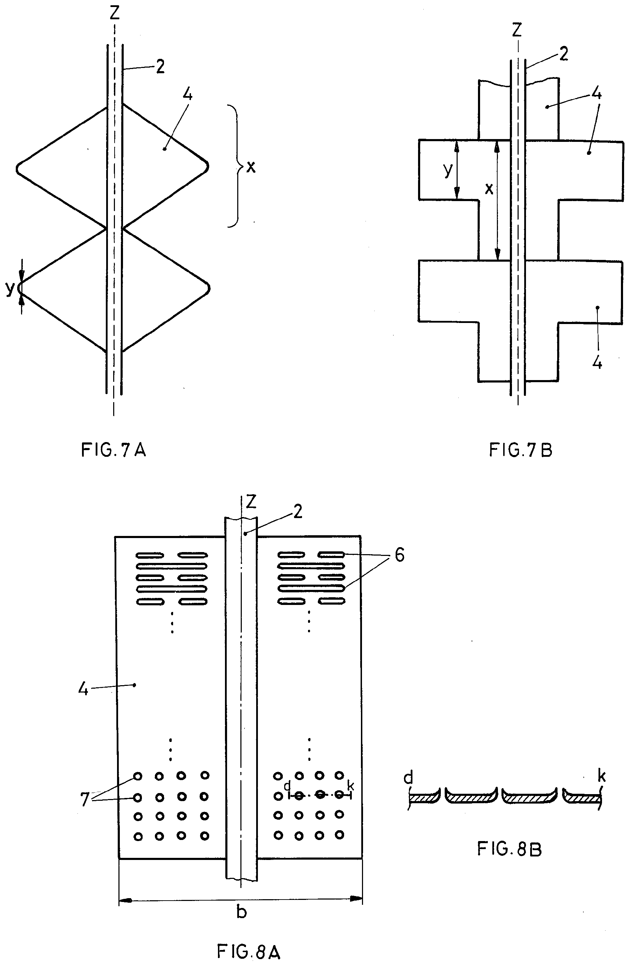

Eine weitere bevorzugte Ausführungsform des Wärmetauschers ergibt sich wenn eine Abmessungen X des Plattenelements parallel zur Rohrachse im Bereich der Plattenelementkontaktfläche grösser ist als eine Abmessungen Y in einem vom Rohr weiter beabstandeten Bereich. Dadurch kann beispielsweise eine durch den Rand des Plattenelements definierte Grenzlinie GL vergrössert werden und oder Plattenelemente so ausgeführt werden, dass sie mit ineinander verschränkt aber, bspw. parallel, beabstandeten Grenzlinien auf der inneren Wärmeaustauschfläche A_{wi} gegenüberliegen, wobei der Abstand einerseits klein genug gewählt ist um eine rasche Wärmeleitung aus der Freifläche zum Plattenelement zu gewährleisten, andererseits gross genug um jeweils gewünschte akustische Dämpfungselemente zwischen den Platten anzubringen. Entsprechende miteinander kombinierbare Formen und bevorzugt Flächenverhältnisse, bzw. Flächen zu Grenzlinienverhältnisse werden unten an Hand der entsprechenden Figuren 7, 8 und 11 dargestellt und beschrieben.

Das bzw. die Rohre können dabei parallel zu einer Längsrichtung L des Plattenelements oder bevorzugt quer, insbesondere bevorzugt im Wesentlichen in einem rechten Winkel zur Längsrichtung L, mit dem Plattenelement verbunden bzw. wirkverbunden sein.

In einer weiteren Ausführungsform kann das Plattenelement im Bereich der Anpressebene senkrecht zur Rohrachse ausgerichtete Längslöcher aufweisen. Dadurch kann das Gewicht des Plattenelements deutlich herabgesetzt werden, ohne dabei den Wärmefluss in Richtung des Rohrs zu unterbrechen. Damit ist es auch möglich die thermisch wirksame(n) Oberfläche(n) des mit einem Rohr wirkverbundenen Plattenelements, bspw. die Anpressfläche oder deren Rückseite, wesentlich zu vergrössern, womit einerseits aus der leichteren Bauweise des Plattenelements, andererseits aus dem geringeren Rohrleitungsbedarf eine deutliche Gewichtsersparnis resultiert. Bei üblichen Plattenelementen des Standes der Technik können bei üblichen Rohrdurchmessern von 5 bis 20 mm, dabei hier bevorzugt 8 bis 15 mm bei einem zentralen, längs auf dem Plattenelement montierten Rohr Breiten b zwischen 80 bis 135 mm realisiert werden. Bei entsprechenden mit Längslöchern versehenen Plattenelementen sind Breiten b von 400 bis 1000 mm möglich. Eine entsprechende um einen Faktor 3 bis ca. 12 grössere Fläche pro Rohreinheit kann damit verwirklicht werden. Des Weiteren stehen auch die durch die Längslöcher gebildeten Freiflächen bei entsprechende Dimensionierung der Längslöcher für akustische Dämpfungsmassnahmen, wie oben beschrieben zur Verfügung. So können bspw. Löcher der Vorderwand zumindest teilweise mit den Löchern bzw. Längslöchern des Plattenelements überlappen, im Bereich der gebildeten Freiflächen Bördelungen der Vorderwandlöcher und/oder entsprechendes flächiges Dämmmaterial (Vliese, Gitter, etc.) vorgesehen sein. Letzteres kann auch einfachheitshalber, bspw. analog zu Wärmetauschern mit direkt auf der inneren Wärmeaustauschfläche aufgebrachten Rohren, über die gesamte Fläche zwischen den Rohren, also Plattenelement und Freifläche überdeckend, angeordnet sein.

In einer weiteren Ausführungsform des Wärmetauschers wird zur Bildung eines alternativen Wärmeaustauschelements zumindest ein Rohr auf zwei seitlich angeordneten Plattenelementen aufgesetzt. Damit ist eine noch flachere Bauweise oder ein Ansetzen der Plattenelement in einem Winkel α, α' in einfacher Weise möglich.

Wärmeaustauschelemente, wie sie im vorliegenden Wärmetauscher Verwendung finden, umfassen ein Rohr zur Durchströmung mit einem Wärmeaustauschfluid und zumindest ein thermisch leitfähiges Plattenelement zur Aufnahme von Umgebungswärme und thermischer Weiterleitung der Umgebungswärme an das Rohr oder/und Aufnahme von Heizwärme aus dem Rohr und Abgabe der Heizwärme an die innere Wärmetauschfläche. Dabei kann das Rohr im Bereich einer Rohrkontaktfläche für den Wärmeübergang zwischen Rohr und Plattenelement bevorzugt gerade ausgeführt und auf zumindest einem Plattenelement oder zwischen zumindest zwei Plattenelementen einer Plattenelementanordnung thermisch leitend befestigt sein. Dabei wird ein Rohr über eine bzw. mehrere Rohrkontaktflächen mit zumindest einem, bzw. bei einer Plattenelementanordnung mit zumindest zwei, oder mehreren Plattenelementen wirkverbunden, die ihrerseits in einer Passung mit gegenüber der Plattendicke D verminderter Materialdicke d zumindest eine Plattenelementkontaktfläche zum Wirkverbinden mit der Rohrkontaktfläche aufweisen.

Bevorzugt wird das Plattenelement dabei aus einem Leichtmetall, insbesondere aus Aluminium auf Grund seiner guten Wärmeleiteigenschaft und geringem Gewicht hergestellt. Bevorzugtes Material für das Rohr ist Kupfer, jedoch kann hier auch eine anderes Metall, beispielsweise ebenfalls Aluminium verwendet werden.

Dabei kann das Rohr auch mäandrierend mit zumindest einem Plattenelement verbunden sein, wobei die gekrümmten Rohrabschnitte bevorzugt ausserhalb der Kontaktflächen liegen, daher das oder die Plattenelemente seitlich überragen, was eine mechanische Anpassung der Kontaktflächen erleichtert.

Um dem Plattenelement auch akustisch dämpfende Eigenschaften zu verleihen, kann dieses auch in eine grössere Anzahl in eine Richtung gebördelte Rundlöcher aufweisen. Diese können zumindest in bestimmten Flächenbereichen des zusätzlich zu den Längslöchern vorgesehen sein, wobei Letztere ebenfalls gebördelt ausgeführt sein können. In einfacher Weise kann dabei die Bördelung durch ein absichtlich an den Schneidkanten verrundetes Stanzwerkzeug zum Herstellen der Löcher erfolgen.

In einer weiteren Ausführungsform erstreckt sich die dem Rohr abgewandte Seite des Plattenelements, bzw. die dem Rohr abgewandten Seiten der zumindest zwei Plattenelemente der Plattenelementanordnung, zu beiden Seiten einer Symmetrieebene S des Plattenelements bzw. der Plattenelementanordnung in jeweils einer unterschiedlichen Ebene A, A', wobei sich die Ebenen A, A' in der Symmetrieebene S, entlang einer Schnittlinie zwischen Symmetrieebene S und einer parallel zu einer Rohrachse Z und senkrecht zur Symmetrieebene S verlaufenden vierten Ebene H, schneiden. Dabei bilden die Ebenen A, A' zur Ebene H jeweils einen spitzen Winkel α, α', so dass das Wärmeaustauschelement (1) mit den Ebenen A, A' federnd an eine zur vierten Ebene H parallelen Wärmeaustauschfläche, beispielsweise der inneren Wärmeaustauschfläche des Wärmeaustauschers, anpressbar ist.

In einer bevorzugten Ausführungsvariante sind dabei die Winkel α, α' dem Betrag nach gleich und/oder öffnen sich in einer bezüglich der Symmetrieebene S entgegengesetzten Richtungen, dabei auf dieselbe, zum Rohr entgegengesetzt gelegenen Seite der Ebene H. Dem Betrag nach wird der Winkel bevorzugt von 1 bis 15°, insbesondere bevorzugt von 2 bis 10° eingestellt.

Grundsätzlich kann auch in einem bezüglich des Wärmeaustauschelements und/oder der inneren Wärmeaustauschfläche hinteren Bereich zusätzlich zumindest ein akustischer Dämpfer oder/und thermisches Isolationsmaterialien angeordnet werden.

Ein weiterer Gegenstand der vorliegenden Erfindung ist ein Wärmetauscher mit zumindest einem Wärmeaustauschelement und einer Vorderwand, die eine innere Wärmeaustauschfläche und eine gegenüberliegende äussere Wärmeaustauschfläche umfasst, wobei die Anpressfläche Aₚᵣ des Wärmeaustauschelements kleiner ist als die innere Wärmeaustauschfläche A_{wi} und das Verhältnis Aₚᵣ / A_{wi} in einem Bereich von 0.3 bis 0.7, bevorzugt in einem Bereich von 0.4 und 0.6 liegt.

Bevorzugt wird dabei das Verhältnis zwischen der inneren Wärmeaustauschfläche A_{wi} und der Grenzlinie GL des zumindest einen Wärmeaustauschelements zwischen 0.5 und 3 cm, insbesondere bevorzugt zwischen 0.9 und 1.8 eingestellt.

Die Vorderwand des Wärmetauschers kann bevorzugt eine Aluminiumplatte, insbesondere bevorzugt eine auf der Vorderseite, daher auf der äusseren Wärmeaustauschfläche vorbehandelte Aluminiumplatte umfassen. Beispielsweise kann durch die Vorbehandlung die Oberfläche so konditioniert werden, dass sie streich- bzw. verputzbar ist.

Rohr und Platte des Wärmeaustauschers können dabei grundsätzlich durch verschiedene Verbundverfahren, wie durch Schweissen, beispielsweise Punkt- oder Linienschweissen, durch Kleben, beispielsweise mittels UVaushärtendem Kleber oder mittels thermisch reaktivem Kleber, welcher mittels Folie auf zumindest eine Kontaktfläche aufgebracht wird und durch Wärmezufuhr schmilzt, miteinander verbunden werden. Als besonders geeignet hat sich aber das im Folgenden beschriebene Lötverfahren herausgestellt, wobei die dort näher beschriebene mechanische (Vor)Bearbeitung der Rohrkontaktfläche auch bezüglich eines Verbundes mit anderen Verbundverfahren, insbesondere den oben Erwähnten, vorteilhaft ist. Auf Grund der metallischen Leitfähigkeit des Lots und der Möglichkeit damit, zumindest bei nahe auf Kontur gefertigten Kontaktflächen, einen grossflächigen metallischen Verbund ohne Verzug durch Belastung mit hohen Temperaturen (wie beim Schweissen) herzustellen, eignen sich Lötverbindungen bzw. Verfahren besonders für das Verbinden der Bauteil von Wärmeaustauschelementen. ein ebenfalls erfinderisches Verfahren zur Herstellung eines Wärmeaustauschelements, insbesondere eines erfindungsgemässen Wärmeaustauschelements, mit zumindest einem Rohr zur Durchströmung mit einem Wärmeaustauschfluid und zumindest einem thermisch leitfähigen Plattenelement zur Aufnahme von Umgebungswärme und thermischer Weiterleitung der Umgebungswärme an das Rohr oder/und Aufnahme von Heizwärme aus dem Rohr und Abgabe der Heizwärme an die Umgebung, umfasst dabei folgende Schritte:
- Erwärmen des Plattenelements auf eine erste Löttemperatur T1 und Aufbringen von Lötzinn mittels Ultraschall auf einer Plattenelementkontaktfläche;
- Erwärmen des Rohrs auf eine zweite Löttemperatur T2 und Aufbringen von Lötzinn mittels Ultraschall auf einer Rohrkontaktfläche;
- Ausrichten der Rohrkontaktfläche an bzw. auf der Plattenelementkontaktfläche und Erwärmen des Plattenelements bzw. des Rohrs auf eine dritte bzw. vierte Löttemperatur T3 und T4, wobei Plattenelement und Rohr gegen einander, vorzugsweise unter Ausübung eines Anpressdrucks, gehalten und anschliessend fortwährend in Position gehalten durch Abkühlen miteinander verbunden werden. Lötzinn steht hier und im Folgenden synonym für unterschiedliche, bevorzugt zinn-haltige Lotlegierung.

Bevorzugt werden dabei die Plattenelementkontaktflächen bzw. die Wärmeaustauschfläche A_{wi}, in einem vorgelagerten Verfahren durch mechanische Bearbeitung des Plattenelements an die Kontur der Rohrkontaktfläche angepasst um die Kontaktfläche zu vergrössern. Besonders geeignet, insbesondere für Kleinserien sind dabei mechanische Bearbeitungsschritte, die Schleifen, Sägen oder Prägen, dabei bevorzugt die Fräsen umfassen.

Beispielsweise kann durch Fräsen eines im Querschnitt kreissegmentförmigen Kanals mit einer Tiefe von 0.6-1 mm oder 5 bis 8% des Aussendurchmesser des Rohrs auf einer einfach geformten, dünnen Platte hergestellt werden, um damit eine grössere Plattenkontaktfläche zur Befestigung des Rohrs herzustellen. Ein solcher Kanal kann auch auf dünnem Plattenmaterial hergestellt werden ohne die Festigkeit zu stark herabzusetzen. Die Plattendicke D beträgt dabei 0.5 bis 3 mm, bevorzugt 1 bis 2 mm, wobei bspw. für geschweisste Wärmeaustauschelemente bzw. für die Vorderwand des Wärmetauscher auch grössere Plattendicken D, bspw. bis zu 10 mm vorteilhaft verwendet werden können. Die Vertiefung des Kanals hat dabei eine Sehnenlänge von ca. 5 mm um Rohre mit einem Durchmesser von ca. 10 bis 12 mm zu befestigen. Die Segmenttiefe des Kanals kann also vorteilhaft in einem Bereich zwischen 2 bis 12%, dabei bevorzugt in einem Bereich zwischen 5 und 8% des Rohr(aussen)durchmessers eingestellt werden.

Alternativ kann auch eine entsprechende Platte durch eine entsprechende tiefere Rundfräsung in zwei Hälften geteilt und diese anschliessend mit zwei bezüglich der Symmetrieebene Z gegenüberliegenden Seiten des Rohrs verbunden werden. Dadurch können auch beidseitig ebene Platten in zwei unterschiedlichen Ebenen A, A', wie oben beschrieben, am Rohr befestigt werden.

Des Weiteren kann dabei das Rohr an zumindest einer im Querschnitt zumindest teilweise ebenen Rohrkontaktfläche mit dem oder den Plattenelementen verbunden werden. Sind am Rohr beispielsweise zwei ebene Rohrkontaktflächen auf zwei bezüglich der Symmetrieebene entgegengesetzten Positionen des Rohrs vorgesehen, können beispielsweise im Querschnitt quaderförmige Standardplatten entweder ohne Bearbeitung oder mit einer seitlichen Winkelphase oder Schrägfläche versehen seitlich am Rohr beispielsweise in einem Winkel a, α' befestigt werden.

Die oben genannten mechanischen Verfahren ermöglichen durch die Verwendung eines einfachen und dünnen Plattenmaterials eine besonders günstige und flexible Fertigung von leichten auch grossflächig ausgeführten Wärmetauschelementen, die prinzipiell auch mit anderen Verfahren, bspw. durch Kleben oder Schweissen verbunden werden können.

Bezüglich des Lötverfahrens werden für das Aufbringen des Lötzinns dabei vorteilhafterweise Ultraschallköpfe verwendet die an die Form der jeweiligen Kontaktfläche angepasst sind. Damit kann die Löttemperatur tiefer gehalten, eine besonders gleichmässige Verteilung des Lötzinns bewirkt und/ oder die Automatisierung des Verfahrens erleichtert werden.

Die Löttemperaturen T1, T2, T3, T4 werden dabei in einem Bereich zwischen 130 und 250°C, dabei bevorzugt zwischen 175° und 225°C, insbesondere bevorzugt bei ca. 180°C gewählt.

Für das alternative Verschweissen von Rohr mit Plattenelement bzw. Vorderwand können bspw. Laser- oder Ultraschall(US)-Schweissgeräte verwendet werden.

### Figurenbeschreibung:

Im Folgenden wird die Erfindung anhand von Figuren und Beispielen näher erläutert. Hier sei darauf hingewiesen, dass die Darstellung der Figuren zwecks besserer Darstellung der erfindungswesentlichen Details weder massstabs- noch proportionsgerecht erfolgt. Beispiele für bevorzugte Bemassungen bzw. Dimensionierungen finden sich in der allgemeinen Beschreibung oben sowie in der Figurenbeschreibung wie folgt. Gleiche Bezugszeichen in unterschiedlichen Zeichnungen bezeichnen denselben Gegenstand, bzw. dieselbe Funktion des Gegenstandes.

Dabei zeigen die Figuren Folgendes:
- Figur 1:: Ein Wärmeaustauschelement des Standes der Technik
- Figur 2:: Ein weiteres Wärmeaustauschelement des Standes der Technik
- Figur 3:: Ein erfindungsgemässes Wärmeaustauschelement
- Figur 4:: Ein weiteres erfindungsgemässes Wärmeaustauschelement
- Figur 5 und Figur 6:: Mehrteiliger Wärmeaustauschelementverbund
- Figur 7 und Figur 8:: Weitere Ausführungsformen des Wärmeaustauschelements
- Figur 9:: Wärmetauscher
- Figur 10:: Verfahren zur Herstellung eines Wärmeaustauschelements
- Figur 11:: Wärmetauscher
- Figur 12:: Verbindung mit Abstandsstufen
- Figur 13:: Verbindung mit Abstandsnoppen
- Figur 14:: Klebe-/Lötverbindung
- Figur 15:: Schweissverbindungen

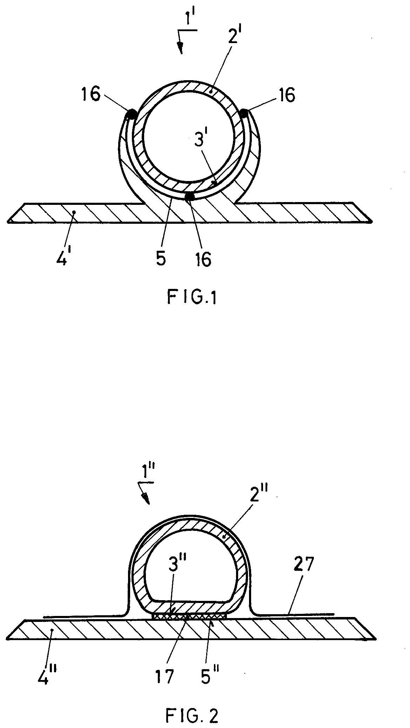

Das in Figur 1 dargestellte Wärmeaustauschelement 1` des Standes der Technik besteht aus einem Rohr 2', dass in einem Hohlprofil eines stranggepressten Plattenelements 4' gehalten ist. Dabei sind Rohr 2' und Plattenelement 4' durch Schweissverbindungen 16 miteinander verbunden. Durch die punktuelle oder linienförmige Verschweissung kommt es nur an den Schweisspunkten bzw. Schweisslinien zu einem direkten wärmeleitenden Materialkontakt zwischen Rohr und Plattenelement, was für den Wärmetransport nachteilig ist. Des Weiteren sind stranggepresste Profile für Kleinserien aufwendig, wenn diese lediglich für eine Rohrdimension verwendet werden können.

Ein weiteres Wärmeaustauschelement 1" des Standes der Technik, wie beispielsweise aus DE 10 2013 209 961 B4 bekannt, ist in Figur 2 dargestellt. Dabei ist ein einseitig abgeflachtes Rohr 2" mittels einer Klebverbindung 17 über Rohrkontaktflächen 3" und Plattenkontaktflächen 5" mit einem als einfaches Profil ausgeführten Platten-, bzw. Kontaktelement 4" verbunden. Nachteilig ist hier, dass sich zwischen den Kontaktflächen 3" und 5" eine Klebeschicht befindet, die einen gut wärmeleitenden metallischen Kontakt zwischen Rohr 2" und Platten-, bzw. Kontaktelement 4" verhindert. Daher wurde hier ein Wärmeleitblech 27 vorgesehen um den Wärmeübergang zu verbessern.

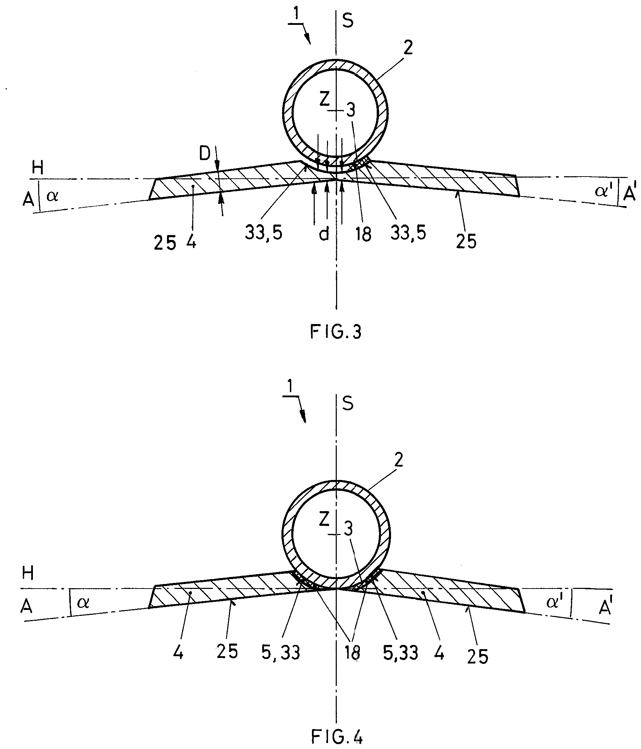

Figur 3 zeigt ein erfindungsgemässes Wärmeaustauschelement 1. Die Rohrachse Z, ist dabei mittig parallel zur Längsachse des Wärmeaustauschelements 1 ausgerichtet und das Rohr durch Lötzinn 18 oder eine beliebig andere gut leitende Lotverbindung mit dem Plattenelement 4 verbunden. Durch die metallische grossflächige Lot-Verbindung auf der hier, durch eine wie unten näher beschriebenen mechanische Bearbeitung an die Rohrkontaktfläche 3 angepasste Plattenelementkontaktfläche 5, kann ein wesentlich verbesserter Wärmeaustausch sichergestellt werden. Im vorliegenden Beispiel ist im Bereich der Passung 33 die Materialdicke d gegenüber der Plattendicke D des Plattenelements 4 annähernd kreissegmentförmig verringert. Dabei kann, besonders bei grösseren Winkeln α, α' (zur Funktion siehe auch Figur 4 und Beschreibung dazu) die Passung in den von der Symmetrieeben seitlich beabstandeten Bereichen etwas grösser als kreissegmentförmig, bspw. parabelförmig sein, um bei Anpressen des Wärmetauschers die Pressung bspw. durch das Lot und/oder den Kleber zwischen Rohr und Wärmeaustauschelement 4 aufzunehmen, wodurch gleichzeitig der Wärmeübergang verbessert wird. Besonders einfach kann dies durch Einbringen der Passung 33 in ein ebenes Plattenmaterial, anschliessendes Konfektionieren auf die gewünschte Plattengrösse und, falls gewünscht, Biegen der Plattenelemente an der Mittellinie der Passung, im vorliegenden Beispiel auch in der Symmetrieebene S des Plattenelements 4. Andere Geometrien, bspw. trogförmig mit flachem Boden zur Anpassung an einseitig abgeflachte Rohre etc. können so ohne weiteres verwirklicht werden.

Ein weiteres erfindungsgemässes Wärmeaustauschelement 1 zeigt Figur 4, in dem statt einem Plattenelement zwei Plattenelemente 4 verwendet werden, die seitlich an das Rohr 2 angesetzt sind. Des Weiteren ist in Figur 3 und 4 zu erkennen, dass die zwei Plattenelemente 4 in zwei gegenüber der Symmetrieebene S angewinkelten Ebenen A, A' liegen. Die Ebenen bilden dabei gegenüber der in der Figur horizontal verlaufende Ebene H die parallel zur Rohrachse Z und rechtwinklig zur Symmetrie-Ebene S verläuft jeweils einen Winkel α, α' und schneiden die Symmetrieebene S gemeinsam mit der Ebene H. Der Winkelbereich für α, α' liegt dabei bevorzugt zwischen 1 und 15°, insbesondere bevorzugt zwischen 2 und 10°. Damit wird sichergestellt, dass die Ebenen A, A' des Wärmeaustauschelements elastisch federnd an eine zur Ebene H parallele Wärmeaustauschfläche anpressbar sind. Durch das flächige Anpressen der durch die Winkelanstellung einfedernden Plattenelemente kann der Wärmeübergang zu einer inneren Wärmeaustauschfläche 21 eines Wärmetauschers 8 deutlich verbessert werden. Das Plattenelement 4 ist auch hier im Wesentlichen beidseitig planar und seitenparallel und bildet zum Rohr hin eine Passung 33, im vorliegenden Fall kreissegment- oder parabelförmig. In einer einfachen Variante kann auch ein schräger Anschnitt des Platenelements 4 als Passung 33 genügen.

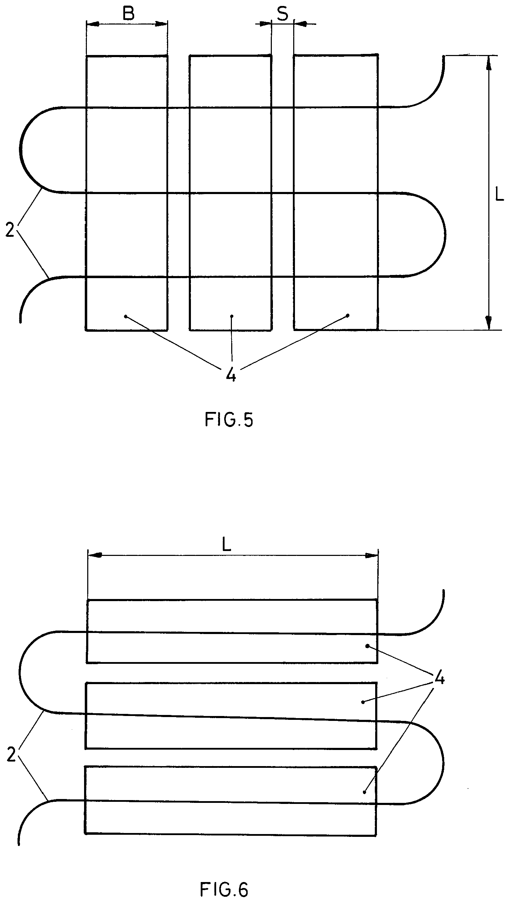

Figur 5 und Figur 6 zeigen eine Anordnung mehrerer Plattenelemente 4, die mittels eines mäandrierenden Rohrs 2 miteinander verbunden sind. Dabei verläuft das Rohr 2 in Figur 5 quer zur Längsrichtung L der Plattenelemente 4, während in Figur 6 das Rohr parallel zur Längsrichtung L der Plattenelemente verläuft. In beiden Fällen liegen die gekrümmten Rohrabschnitte vorteilhaft ausserhalb der Kontaktflächen.

Figur 7a und 7b zeigen zwei weitere bevorzugte Ausführungsformen der vorliegenden Erfindung, wobei eine Abmessung x des Plattenelements parallel zur Rohrachse im Bereich oder an der Plattenelement-Kontaktfläche grösser ist als eine Abmessung y in einem vom Rohr 2 weiter beabstandeten Bereich. Dabei kann die Änderung der Abmessungen in den Dimensionen des Plattenelements 4 wie in Figur 7a gezeigt kontinuierlich erfolgen bspw. wie hier als seitlich abragende Dreiecke. Andererseits können sich die Abmessungen wie in Figur 7b beispielhaft dargestellt auch sprungartig ändern, wenn breite und schmale Bereiche des Plattenelements sich entlang der Rohrachse Z abwechseln. Wie für den Fachmann ohne weiteres erkennbar können hier auch Kombinationen von, bezüglich der Breitenabmessungen b sich teils kontinuierlich teils sprungartig ändernde Formen des oder der Plattenelemente verwendet werden. Auch können je nach Bedarf und Menge der zu fertigenden Wärmetauscher entweder speziell auf eine Grösse konfektionierte Plattenelemente oder flexibel für kleinere Losgrössen oder unterschiedliche Wärmetauscher verwendbare hintereinander anordenbare geometrische geformte Plattenelemente 4, wie bspw. in Fig. 7B dargestellt eingesetzt werden.

Figur 8a zeigt schematisch zwei weitere Möglichkeiten zur Ausführung eines erfindungsgemässen Wärmeaustauschelements. Dabei sind in einem in der Zeichnung oberen Bereich des oder der Plattenelemente 4 Längslöcher 6 zu erkennen, deren Ausrichtung senkrecht zur Rohrachse Z ist um den Wärmefluss möglichst wenig zu beeinflussen. Durch Anbringen entsprechender Längslöcher ist es einerseits möglich ohne oder mit einer nur geringfügigen Erhöhung des Gesamtgewichts des Wärmeaustauschelements wesentlich grössere Flächen, beispielsweise in den Dimensionen der gesamten inneren Wärmeaustauschfläche A_{wi} 21 eines Wärmetauschers 8, für einen Wärmeaustausch zur Verfügung zu stellen. Des Weiteren kann so die Freifläche 28 des Wärmetauschers, bspw. zum vorsehen akustisch dämpfender Elemente vergrössert werden. Unter Freifläche 28 wird hier die innere Wärmeaustauschfläche A_{wi} eines Wärmetauschers 8 verstanden, die nicht in direktem Kontakt mit der Anpressfläche Ap des oder der Plattenelemente steht. Schliesslich wird es durch solche Massnahmen möglich den Wärmeleitwert der gesamten Kühl-/Heizfläche, hier Vorderwand 10 des Wärmetauschers 8 genannt, zu erhöhen, da jeweils zwar viele aber nur kleine bzw. schmale Freiflächen mit jeweils kurzen Wärmeleitwegen zum nächsten mit einer Anpressfläche 25 verbundenen Bereich.

Ist bei herkömmlichen Wärmeaustauschelementen eine Breite b von 80 bis 135 mm möglich, so kann diese Breite, unter Beibehaltung eines vergleichbaren Übertragungswerts, mit einer entsprechenden Lochung vorteilhaft zwischen 400 bis 1000 mm gewählt werden.

Einen anderen Zweck erfüllen die im unteren Bereich des oder der Plattenelemente 4 dargestellten Rundlöcher, die an ihrer, wie in Figur 8b dargestellten, der Wärmeaustauschfläche gegenüberliegenden Seite eine Bördelung aufweisen.

Entsprechende Bördelungen können auch an den Längslöcher vorgesehen sein, bzw. ist eine Kombination von akustisch wirksamen Löchern und entsprechenden Längslöchern ebenfalls möglich.

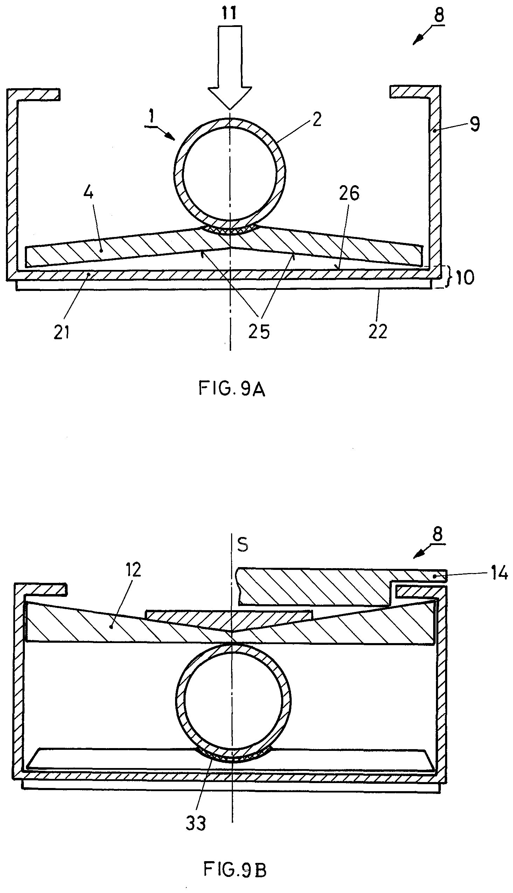

Figur 9 zeigt einen erfindungsgemässen Wärmetauscher 8 mit einem eingesetzten Wärmeaustauschelement 2, dass hier ein Rohr 2 mit einem daran befestigten Plattenelementen 4 umfasst. Analog zu dem bezüglich der Figuren 3 und 4 Beschriebenen liegt die Anpressebene 25 der Plattenelemente ohne Druck nicht eben auf der Wärmetauschebene A_{wi} 26 des Wärmetauschers 8. Erst durch Anpressen mit dem oder den in Figur 9A symbolisch durch einen Pfeil dargestellten Anpressmitteln 11, die in Figur 9B beispielhaft als eine im Gehäuse des Wärmetauschers 8 eingreifende Klemmvorrichtung 12 dargestellt ist, werden die Anpressebenen 25 mit der Wärmetauschebene 21 des Wärmetauschers 8 in wärmeleitenden Kontakt gebracht. Dies kann entweder direkt oder in Kombination mit einer unterstützenden vorzugsweise auf der Anpressfläche der Plattenelemente 4 vorbeschichteten dünnen Klebeschicht erfolgen. Zusätzlich können eventuelle Hohlräume 24 zwischen Wärmetauschebene 21 und Wärmeaustauschelement 1, beispielsweise unter der Löt- oder Klebelinie von seitlich am Rohr befestigter Plattenelementen, mit Wärmeleitpaste gefüllt sein, die alternativ auch auf Anpressebene 25 und/oder Wärmetauschebene aufgetragen sein kann. Der Wärmetauscher 8 kann dabei auch andere erfindungsgemässe Wärmeaustauschelemente oder eine Kombination davon enthalten, wie sie beispielsweise in den Figuren und Beschreibungen ausgeführt.

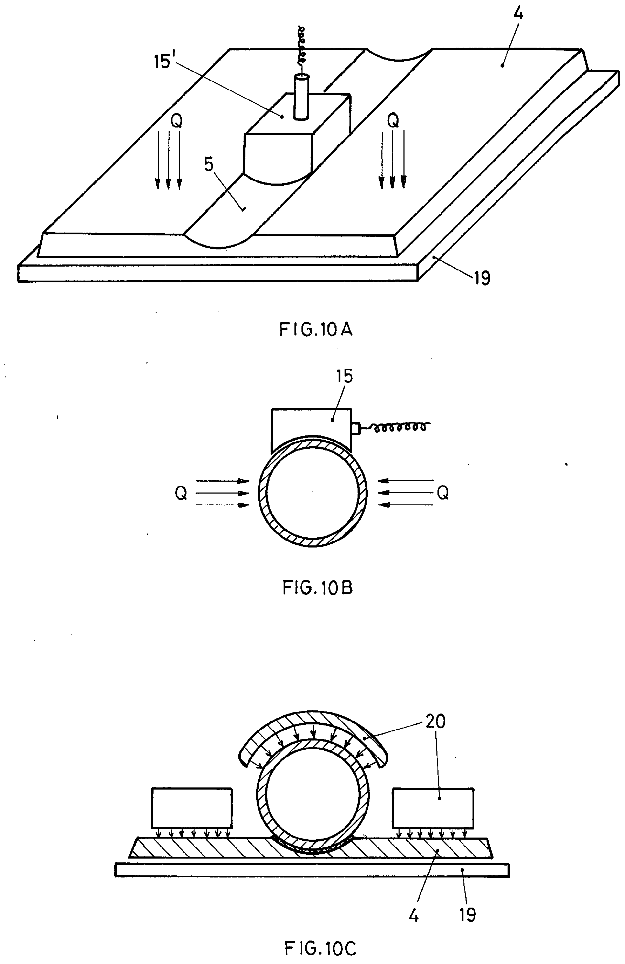

Figur 10 zeigt die Schritte eines erfindungsgemässen Verfahrens zur Herstellung eines Wärmeaustauschelements 1. Dabei wird, wie in Figur 10a beispielhaft dargestellt, wie eine Plattenelement-Kontaktfläche 5 mit Lötzinn beschichtet wird, wobei dem Plattenelement 4 Wärme Q zugeführt und nach Erreichen einer Löttemperatur T1 das Lötzinn mithilfe eines der Kontur der Plattenelementkontaktfläche 5 angepassten Ultraschallkopfes 15 gleichmässig und dünn verteilt wird. Die Wärme kann dabei durch Wärmestrahlung oder durch direkten Kontakt mit den Heizelementen 20 und/oder über eine bei Bedarf beheizbare Arbeitsplatte 19 zugeführt werden. Durch die US-Behandlung während dieses Lötschritts wird die Oberflächenspannung des geschmolzenen Lötzinns herabgesetzt, was einen besonders gleichmässigen und dünnen Auftrag ermöglicht.

Gleichzeitig oder gestaffelt dazu kann die Rohrkontaktfläche 3 gleichfalls nach Erwärmung des Rohrs unter Zuhilfenahme eines auf den Aussenumfang des Rohrs 2, bzw. der Rohrkontaktfläche 3 angepassten Ultraschallkopfs 15' mit Lötzinn beschichtet werden. Anschliessend wird, wie in Figur 10c dargestellt, die Rohrkontaktfläche 3 auf der Plattenelementkontaktfläche 5 ausgerichtet und Plattenelement 4 sowie Rohr 2, im vorliegenden Fall mittels Heizelementen 20 auf eine dritte bzw. vierte Löttemperatur T3, T4 gebracht. Dabei werden Rohr 2 und Plattenelement 4 vorzugsweise unter Ausübung eines Anpressdrucks gehalten und abgekühlt, womit das Wärmeaustauschelement fertiggestellt ist.

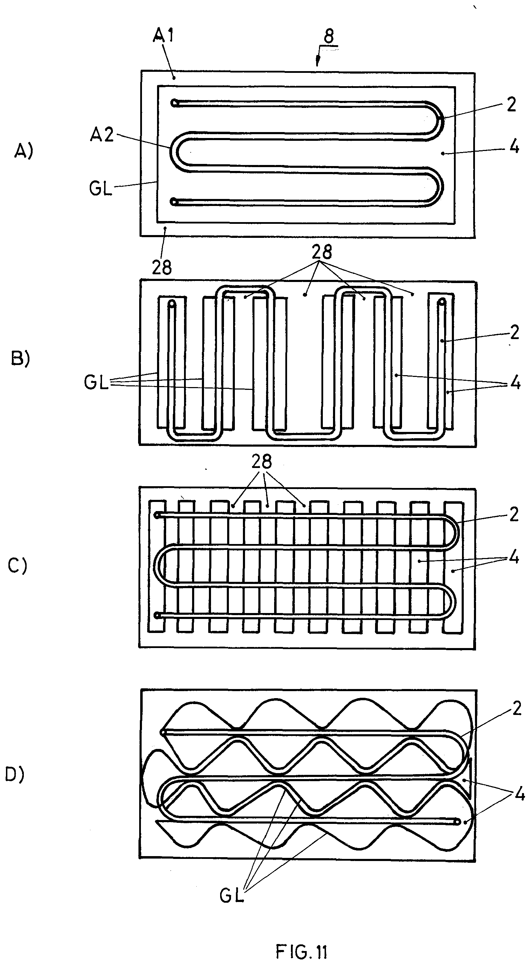

In Figur 11 werden verschiedene Varianten eines Wärmetauschers 8 in Aufsicht von der Rückseite her dargestellt. Dabei zeigt Figur 11A einen bekannten konventionellen Wärmetauscher, mit einem Wärmeaustauschelement das aus einem Plattenelement 4 mit einem an dessen Rückseite befestigten Rohr 2 besteht. Das Wärmeaustauschelement liegt mit der Anpressfläche auf der innere Wärmeaustauschfläche A_{wi} des Wärmetauschers auf wodurch zwischen den Rändern der Anpressfläche und dem äusseren Umfang der Wärmeaustauschfläche eine Freifläche 28 gebildet wird. Diese beträgt bei einer hier angenommenen Wärmeaustauschfläche A_{wi} von 200 cm² (Länge l_{wi} von 20, Breite b_{wi} von 10 cm) und einer Anpressfläche Aₚᵣ von 144 cm² (Länge l_{wi} von 18, Breite b_{wi} von 8 cm) bei 66 cm², was einem Flächenverhältnis von Aₚᵣ / A_{wi} = 0.72 entspricht. Da bei solchen Wärmetauschern meist neben der Wärmetauschleistung auch bestimmte akustische Eigenschaften, insbesondere schalldämpfende Eigenschaften verlangt werden, bleibt für das Anbringen von solchen schalldämpfenden Elementen, wie bspw. Dämpfungsplatten und/oder Vliesen lediglich der schmale Bereich zwischen Anpressfläche Aₚᵣ und äusseren Umfang der Wärmeaustauschfläche A_{wi}. Dieser kann auch nicht beliebig verbreitert werden, da sonst der gewünschte Wärmeaustausch zwischen Wärmetauscher und Plattenelement schlechter wird. Um diesen über den gesamten Wärmeaustauscher möglichst effizient zu halten, muss nämlich der Abstand eines beliebigen, nicht in direktem Kontakt mit der Anpressfläche stehenden Flächenelements der Wärmeaustauschfläche zu einer, durch den Rand der Anpressfläche definierten Grenzlinie GL möglichst gering bzw. das Verhältnis von Wärmeaustauschfläche zu Grenzlinie A_{wi} / GL (hier 3.8 cm) möglichst klein sein.

Dementsprechend sind in den Figuren 11B und 11C Konfigurationen für erfindungsgemässe Wärmetauscher dargestellt, wie sie mit erfindungsgemässen Platenelementen in einfacher Weise verwirklicht werden können. Dabei werden in Figur 11B 6 Plattenelemente mit einer Dimension von 2 x 8 cm, in Figur 11C 10 Plattenelemente mit einer Dimension von 1 x 8 cm in einem rechteckigen Wärmetauscher wie oben beschrieben eingesetzt. Damit ist ein Flächenverhältnis Aₚᵣ / A_{wi} von 0.48 bzw. 0.4 und ein Verhältnis A_{wi} / GL von 1.67 bzw. 1.1 cm erzielbar. Damit ist ein im Vergleich zum Stand der Technik deutlich besserer Wärmeaustausch möglich.

Eine andere Möglichkeit um die entsprechenden Verhältniszahlen (Aₚᵣ / A_{wi} bzw. A_{wi} / GL) zu verbessern, ist in Figur 11D dargestellt, bei der im Randbereich wellenförmige gestaltete Plattenelemente, mit zumindest abschnittsweise zueinander parallelen Grenzlinien eingesetzt werden. Ein analoger Aufbau ist grundsätzlich auch mit anderen, beispielsweise aus Figur 7A und/oder 7B bekannten Geometrien der Plattenelemente möglich.

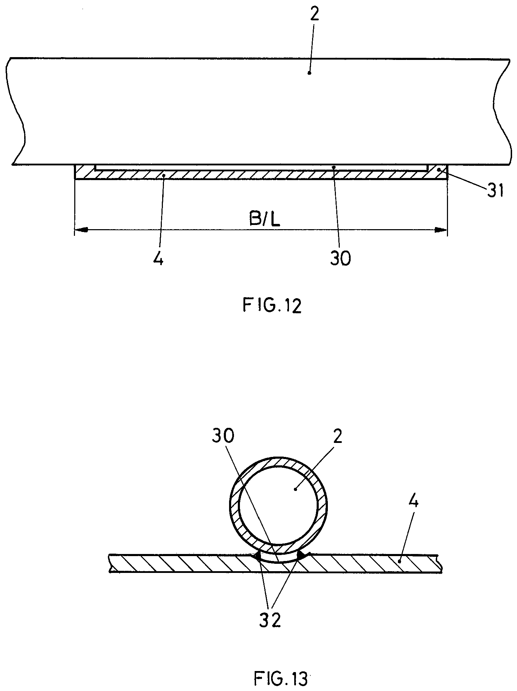

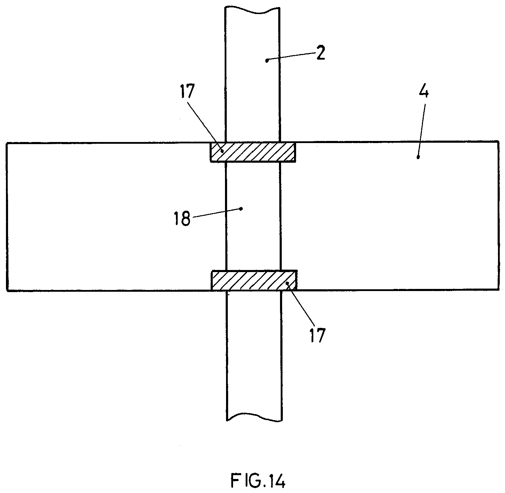

Figuren 12 und 13 zeigen verschieden Ausführungen eines Wärmetauschelements mit Lotspalt 30. Dabei wird in Figur 12 der Lotspalt durch seitlich in der Passung vorgesehen Abstandsstufen 31 zwischen Rohr 2 und Plattenelement 4 gebildet. Die Abstandsstufen 31 können dabei in einfacher Weise, bspw. durch Anheben des die Passung erzeugenden Rundfräsers in den Randbereichen der Passung hergestellt werden. Alternativ kann, wie in Figur 13 dargestellt, der Spalt durch Abstandsnocken 32 gebildeten werden. Letztere können aufgesetzt, geklebt, gemeinsam verlötet oder vorteilhaft aus dem Material des Plattenelements selbst bspw. durch Anbringen von definierten Schweisshöckern gebildet werden. Letztere können mittels Punktschweisselektroden erzeugt werden, die von einer der Passung gegenüber liegenden Seite in Richtung der Passung gedrückt werden. Figur 14 zeigt ein Wärmeaustauschelement bei dem das Rohr 2 mit dem Plattenelement 4 durch eine Klebverbindung 17 und eine Lötverbindung 18 verbunden ist. Die Klebverbindung 17 befindet sich dabei auf beiden dem Rohr 2 gegenüber liegenden Randbereichen des Plattenelements 4, oder im Endbereich der Passung, während die Lötverbindung 18 sich dazwischen befindet. Es versteht sich für den Fachmann von selbst, dass auch andere Anordnungen möglich sind, bspw. eine eventuell zusätzliche Klebestelle in der Mitte. Das Vorsehen der zwei Klebverbindungen im Randbereich der Passung hat aber den Vorteil, dass dadurch ein Ausrinnen des Lötzinns, beispielsweise beim Zusammenfügen der Teile des Wärmeaustauschers, verhindert werden kann.

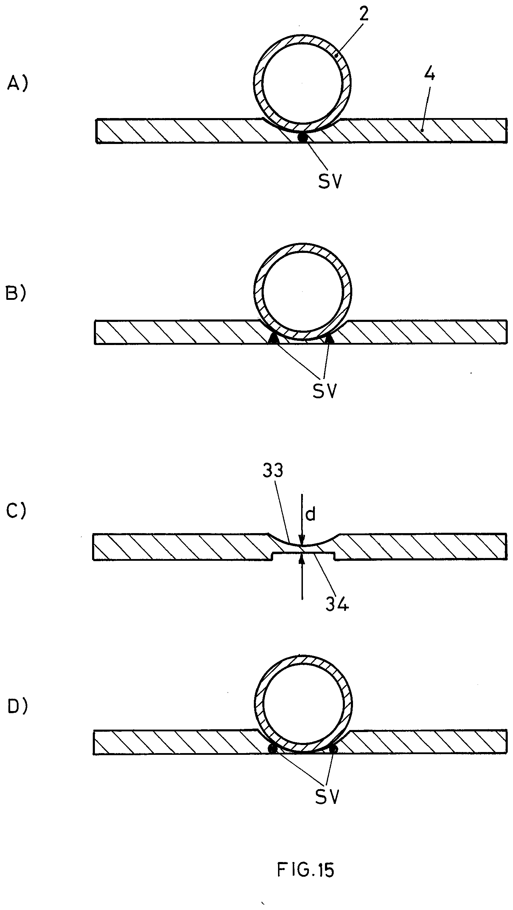

Figur 15A bis D zeigt verschiedene Gestaltungsmöglichkeiten zur Ausführung von Schweissverbindung eines erfindungsgemässen Wärmeaustauschelements 1 im Querschnitt. In Figuren 15A und B ist eine Konfiguration mit Rohr 2 und einteiligem Plattenelement 4 dargestellt, wobei A eine Verbindung mit einer einreihigen Abfolge, Figur B eine Verbindung mit einer zweireihigen Abfolge von Punktschweissungen zeigt.

In Figur 15C ist ein Plattenelement 4 gezeigt, bei dem in einem weiteren vorgelagerten mechanischen Bearbeitungsschritt die Materialdicke d im Bereich der Passung 33 durch Anbringen einer Ausdünnung 34, hier in Form einer Sicke, auf der dem Rohr 2 abgewandten Seite des Plattenelements 4, zusätzlich herabgesetzt wurde. Damit können auch etwas dickere Plattendicken D verwendet oder die Passung 33 weniger tief ausgeführt werden und trotzdem eine für die Herstellung einer sicheren Schweissverbindung SV besonders geeignete Materialdicke d zwischen 0.1 bis 0.5 mm im Bereich der Passung 33 einzustellen. Dies da bei erfindungsgemässen Wärmeaustauschelementen 1 die Schweissverbindung in der Passung 33 von der dem Rohr 2 abgewandten Seite des Plattenelements 4 ausgehend angebracht wird. Dabei können bspw. Laser- oder Ultraschall(US)-Schweissgeräte verwendet werden.

Wenn auch einzelne Merkmale nur im Zusammenhang mit einzelnen Beispielen genannt sind, können entsprechende Merkmale auch mit anderen Beispielen oder ganz allgemein mit Ausführungsformen, die sich aus der allgemeinen Offenbarung der Erfindung ergeben kombiniert werden, sofern eine solche Kombination nicht, wie sich dem Fachmann ohne Weiteres erschliesst, offensichtlich sinnwidrig wäre.

### BEZUGSZEICHEN

- 1: Wärmeaustauschelement
- 2: Rohr
- 3: Rohrkontaktfläche
- 4: Plattenelement
- 5: Plattenelementkontaktfläche
- 6: Längsloch
- 7: Rundloch
- 8: Wärmetauscher
- 9: Seitenwand
- 10: Vorderwand
- 11: Anpressmittel
- 12: Klemmvorrichtung
- 13: Dämpfer
- 14: Isolationsmaterial
- 15: US-Kopf (Ultraschallkopf)
- 16: Schweissverbindung
- 17: Klebverbindung
- 18: Lotverbindung
- 19: Arbeitsplatte
- 20: Heizelement
- 21: Innere Wärmeaustauschfläche des Wärmetauschers
- 22: Äussere Wärmeaustauschfläche des Wärmetauschers
- 23: Vlies und/oder Platte
- 24: Zwischenraum
- 25: Anpressfläche
- 26: Beschichtung
- 27: Wärmeleitblech
- 28: Freifläche
- 29: Wärmeaustauschkontaktfläche
- 30: Lotspalt
- 31: Abstandsstufe
- 32: Abstandsnoppe
- 33: Passung
- 34: Ausdünnung, Sicke

- A, A': 1. und 2. Ebene
- B: Breite des Plattenelements
- D: Plattendicke (Dicke des Plattenelements (4))
- d: Materialdicke des Plattenelements im Bereich der Passung
- H: 3. Ebene (Horizontalebene)
- L: Längsrichtung, Länge des Plattenelements
- SV: Schweissverbindung
- S: Spaltbreite
- x: Abmessung des Plattenelements parallel zur Rohrachse im Bereich der Plattenelementkontaktfläche
- y: Abmessung des Plattenelements parallel zur Rohrachse in einem vom Rohr weiter beabstandeten Bereich
- Z: Rohrachse

## Patentansprüche

1. Wärmetauscher umfassend ein Rohr(2), eine **Vorderwand (10)** zur Aufnahme von Umgebungswärme und thermischer Weiterleitung der Umgebungswärme an das mit einem Wärmeaustauschfluid durchströmbare **Rohr (2)** oder zur Aufnahme von Heizwärme aus dem Rohr (2) und Abgabe der Heizwärme an die Umgebung, wobei die Vorderwand (10) eine **innere Wärmeaustauschfläche A_{w}i (21)** und eine gegenüberliegende **äussere Wärmeaustauschfläche (22)** umfasst, wobei das Rohr (2) auf zumindest einem **Plattenelement (4)**, mit einer in thermisch leitendem Kontakt mit der inneren Wärmeaustauschfläche A_{wi} (21) stehenden **Anpressfläche Aₚᵣ (25)**, angeordnet ist, und ein Kontaktmittel zur thermischen Kontaktierung des Rohrs (2) mit dem Plattenelement (4) einerseits und dem Rohr (2) andererseits vorgesehen ist, wobei das Kontaktmittel ein Verbindungsmittel oder/und Anpressmittel umfasst und das zumindest eine Plattenelement (4) im Bereich einer Plattenelementkontaktfläche (5) an eine Rohrkontaktfläche (3) mittels einer **Passung (33)**, mit einer gegenüber der Plattendicke D des Plattenelements (4) verringerten Materialdicke d, angepasst ist um die Kontaktflächen (3, 5, 30) zu vergrössern,
**dadurch gekennzeichnet,**
**dass** das Verhältnis Aₚᵣ / A_{wi}, der Anpressfläche Aₚᵣ (25) zur inneren Wärmeaustauschfläche A_{wi} (21), in einem Bereich von 0.3 bis 0.7 liegt, wobei das Verhältnis A_{wi} / GL, das Verhältnis der inneren Wärmeaustauschfläche A_{wi} und einer Grenzlinie GL, wobei die Grenzlinie durch den Rand des Plattenelements definiert ist, des zumindest einen Wärmeaustauschelements bevorzugt zwischen 0.5 und 3 cm liegt.

2. **Wärmetauscher** nach Anspruch 1, **dadurch gekennzeichnet, dass** er ein Gehäuse mit zumindest einer an die Vorderwand ansetzenden **Seitenwand** (9) umfasst.

3. Wärmetauscher nach einem der vorhergehenden Ansprüche, **dadurch gekennzeichnet, dass** die Anpressmittel (11) eine Rückwand (11') und/oder eine mit der Seiten- oder Rückwand zusammenwirkende Klemmvorrichtung (12) umfassen.

4. Wärmetauscher nach einem der vorhergehenden Ansprüche, **dadurch gekennzeichnet, dass** zumindest auf einem Teilbereich der inneren Wärmeaustauschfläche A_{wi} (21) zwischen dem(n) Rohr(en) (2) oder/und dem(n) Plattenelement(en) (4), insbesondere auf einer Freifläche (28) ein akustischer **Dämpfer (13)** angeordnet ist.

5. Wärmetauscher nach einem der vorhergehenden Ansprüche, **dadurch gekennzeichnet, dass** die Vorderwand (10) und/oder das Plattenelemente (4) **Rundlöcher (7)** aufweist.

6. Wärmetauscher nach Anspruch 5, **dadurch gekennzeichnet, dass** die **Rundlöcher (7)** der Vorderwand (10) und/oder des Plattenelements auf der inneren Wärmeaustauschfläche A_{wi} (21) und/oder **der Anpressfläche (25) des Plattenelements gegenüberliegenden Seite gebördelt sind**.

7. Wärmetauscher nach einem der vorhergehenden Ansprüche, **dadurch gekennzeichnet, dass** das Rohr (2) eine im Querschnitt zumindest teilweise ebene Rohrkontaktfläche (3) aufweist.

8. Wärmetauscher nach einem der vorhergehenden Ansprüche, **dadurch gekennzeichnet, dass** die **Passung** im Randbereich oder im gesamten Querschnitt kreissegmentförmig ist, dabei bevorzugt mit einer **Tiefe von** 0.3 bis 1.5 mm oder 2 bis 12% des Aussendurchmessers des Rohrs, dabei bevorzugt von 0.6 bis 1 mm oder 5 bis 8% des Aussendurchmessers des Rohrs.

9. Wärmetauscher nach einem der vorhergehenden Ansprüche, **dadurch gekennzeichnet, dass** die **Passung** (33) eine ebene Fläche **umfasst oder ist**, **deren mittlere Rauheit auf einen Ra-Bereich von 0.05 bis 2.0 µm**, **bevorzugt von 0.1 bis 1 µm eingestellt ist**.

10. Wärmetauscher nach einem der vorhergehenden Ansprüche, **dadurch gekennzeichnet, dass** das Verhältnis Apr / Awi in einem Bereich von 0.4 und 0.6 liegt.

11. Wärmetauscher nach einem der vorhergehenden Ansprüche, **dadurch gekennzeichnet, dass** das Rohr (2) mäandrierend mit der inneren Wärmeaustauschfläche A_{wi} ((21) oder/und mit dem Plattenelement (4) wirkverbunden ist.

12. Wärmetauscher nach einem der vorhergehenden Ansprüche, **dadurch gekennzeichnet, dass** das Verhältnis GL / A_{wi}, in einem Bereich zwischen 0.9 und 1.8 liegt.

13. Wärmetauscher nach einem der vorhergehenden Ansprüche, **dadurch gekennzeichnet, dass** eine **Abmessungen X** des Plattenelements parallel zur Rohrachse im Bereich der Plattenelementkontaktfläche grösser ist als eine **Abmessungen Y** in einem vom Rohr (2) weiter beabstandeten Bereich.

14. Wärmetauscher nach einem der vorhergehenden Ansprüche, **dadurch gekennzeichnet, dass** das Rohr (2) parallel zu einer **Längsrichtung L** des Plattenelements (4) oder bevorzugt quer, insbesondere bevorzugt im Wesentlichen in einem rechten Winkel zur **Längsrichtung L**, mit dem Plattenelement (4) wirkverbunden ist.

15. Wärmetauscher nach einem der vorhergehenden Ansprüche, **dadurch gekennzeichnet, dass** das Plattenelement (4) senkrecht zur Rohrachse ausgerichtete **Längslöcher (6)** aufweist.

16. Wärmetauscher nach einem der Ansprüche 6 bis 15, **dadurch gekennzeichnet, dass** die Löcher der Vorderwand (10) zumindest teilweise mit den Löchern des Plattenelements (4) überlappen.

17. Wärmetauscher nach einem der vorhergehenden Ansprüche, **dadurch gekennzeichnet, dass** das Rohr (2) auf zwei seitlich angeordneten Plattenelementen (4) aufgesetzt ist.

## Claims

1. Heat exchanger, comprising a tube (2), a front wall (10) for receiving ambient heat and thermal transfer of ambient heat to the tube (2) through which a heat-exchangeable fluid can flow or for receiving heating heat from the tube (2) and delivery of heating heat to the environment, wherein the front wall (10) comprises an inner heat exchange surface A_{wi} (21) and an opposite outer heat exchange surface (22), wherein the tube (2) is arranged on at least one plate element (4), having a contact surface Aₚᵣ (25) being in thermally conductive contact with the inner heat exchange surface A_{wi} (21), and a contact means is provided for thermal contacting of the tube (2) with the plate element (4) on the one hand and the tube (2) on the other hand, wherein the contact means comprises a connecting means or/and contact pressure means, and the at least one plate element (4) is adapted in the region of a plate element contact surface (5) to a tube contact surface (3) by means of a fit (33), having a material thickness d which is reduced in relation to the plate thickness D of the plate element (4), in order to increase the contact surfaces (3, 5, 30),
**characterized in that**
the ratio Aₚᵣ/A_{wi}, of the contact surface Aₚᵣ (25) to the inner heat exchange surface A_{wi} (21), is in a range of 0.3 to 0.7, wherein the ratio A_{wi}/GL of the at least one heat exchange element, i.e. the ratio of the inner heat exchange surface A_{wi} and a boundary line GL, wherein the boundary line is defined by the edge of the plate element, is preferably between 0.5 and 3 cm.

2. Heat exchanger according to claim 1, **characterized in that** it comprises a housing with at least one side wall (9) attaching to the front wall.

3. Heat exchanger according to one of the preceding claims, **characterized in that** the contact pressure means (11) comprise a rear wall (11') and/or a clamping device (12) cooperating with the side or rear wall.

4. Heat exchanger according to one of the preceding claims, **characterized in that** an acoustic damper (13) is arranged at least on a portion of the inner heat exchange surface A_{wi} (21) between the tube(s) (2) or/and the plate element(s) (4), in particular on an open space (28).

5. Heat exchanger according to one of the preceding claims, **characterized in that** the front wall (10) and/or the plate element (4) has round holes (7).

6. Heat exchanger according to claim 5, **characterized in that** the round holes (7) of the front wall (10) and/or of the plate element are crimped on the inner heat exchange surface A_{wi} (21) and/or the side opposite the contact surface (25) of the plate element.

7. Heat exchanger according to one of the preceding claims, **characterized in that** the tube (2) has a tube contact surface (3) that is at least partially planar in cross-section.

8. Heat exchanger according to one of the preceding claims, **characterized in that** the fit in the edge region or in the entire cross-section is circular segment-shaped, thereby preferably with a depth of 0.3 to 1.5 mm or 2 to 12% of the outer diameter of the tube, thereby preferably from 0.6 to 1 mm or 5 to 8% of the outside diameter of the tube.

9. Heat exchanger according to one of the preceding claims, **characterized in that** the fit (33) comprises or is a planar surface, whose average roughness is set to an Ra range of 0.05 to 2.0 µm, preferably from 0.1 to 1 µm.

10. Heat exchanger according to one of the preceding claims, **characterized in that** the ratio A_{pr/}A_{wi} is in a range of 0.4 and 0.6.

11. Heat exchanger according to one of the preceding claims, **characterized in that** the tube (2) is operatively connected in a meandering manner to the inner heat exchange surface A_{wi} (21) or/and to the plate element (4).

12. Heat exchanger according to one of the preceding claims, **characterized in that** the ratio GL/A_{wi} lies in a range between 0.9 and 1.8.

13. Heat exchanger according to one of the preceding claims, **characterized in that** a dimension X of the plate element parallel to the tube axis in the region of the plate element contact surface is greater than a dimension Y in a region further spaced from the tube (2).

14. Heat exchanger according to one of the preceding claims, **characterized in that** the tube (2) is operatively connected to the plate element (4) parallel to a longitudinal direction L of the plate element (4) or preferably transversely, more preferably substantially at a right angle, to the longitudinal direction L.

15. Heat exchanger according to one of the preceding claims, **characterized in that** the plate element (4) has longitudinal holes (6) aligned perpendicularly to the tube axis.

16. Heat exchanger according to one of claims 6 to 15, **characterized in that** the holes of the front wall (10) at least partially overlap with the holes of the plate element (4).

17. Heat exchanger according to one of the preceding claims, **characterized in that** the tube (2) is mounted on two laterally arranged plate elements (4).

## Revendications

1. Echangeur thermique comprenant un tube (2), une paroi avant (10) destinée à absorber la chaleur ambiante et à rediriger thermiquement la chaleur ambiante vers le tube (2) pouvant être traversé par un fluide d'échange thermique, ou bien destinée à absorber la chaleur thermique provenant du tube (2) et à distribuer la chaleur thermique dans l'environnement, la paroi avant (10) comprenant une surface d'échange thermique intérieure A_{wi} (21) et une surface d'échange thermique extérieure (22) opposée, le tube (2) étant agencé sur au moins un élément de plaque (4) avec une surface d'appui Aₚᵣ (25) en contact thermiquement conducteur avec la surface d'échange thermique intérieure A_{wi} (21), et dans lequel il est prévu un moyen de contact pour établir le contact thermique du tube (2) avec l'élément de plaque (4) d'un côté et le tube (2) de l'autre côté, le moyen de contact comprenant un moyen de connexion ou/et un moyen de pression, et le au moins un élément de plaque (4) dans la zone d'une surface de contact d'élément de plaque (5) au niveau d'une surface de contact du tube (3) à l'aide d'un ajustement (33), avec une épaisseur de matériau réduite par rapport à l'épaisseur D de l'élément de plaque (4), étant adapté pour agrandir les surfaces de contact (3, 5, 30), **caractérisé en ce que** le rapport Aₚᵣ/A_{wi}, surface d'appui Aₚᵣ (25) sur surface d'échange thermique intérieure A_{wi} (21) se situe dans une plage allant de 0,3 à 0,7, le rapport A_{wi}/GL, le rapport surface d'échange thermique intérieure A_{wi} sur limite GL, la limite étant définie par le bord de l'élément de plaque, du au moins un élément d'échange thermique se situant de préférence entre 0,5 et 3 cm.

2. Echangeur thermique selon la revendication 1, **caractérisé en ce qu'**il comprend un boîtier avec au moins une paroi latérale (9) fixée à la paroi avant.

3. Echangeur thermique selon l'une des revendications précédentes, **caractérisé en ce que** les moyens d'appui (11) comprennent une paroi arrière (11') et/ou un dispositif de serrage (12) qui coopère avec la paroi latérale ou arrière.

4. Echangeur thermique selon l'une des revendications précédentes, **caractérisé en ce qu'**il est agencé au moins sur une zone partielle de la surface d'échange thermique intérieure A_{wi} (21), entre le ou les tubes (2) ou/et le ou les éléments de plaque (4), en particulier sur une surface libre (28), un amortisseur acoustique (13).

5. Echangeur thermique selon l'une des revendications précédentes, **caractérisé en ce que** la paroi avant (10) et/ou l'élément de plaque (4) présente des trous ronds (7).

6. Echangeur thermique selon la revendication 5, **caractérisé en ce que** les trous ronds (7) de la paroi avant (10) et/ou de l'élément de plaque sont bordés sur la surface d'échange thermique intérieure A_{wi} (21) et/ou le côté opposé à la surface d'appui (25) de l'élément de plaque.

7. Echangeur thermique selon l'une des revendications précédentes, **caractérisé en ce que** le tube (2) présente une surface de contact de tube (3) au moins partiellement plane en coupe transversale.

8. Echangeur thermique selon l'une des revendications précédentes, **caractérisé en ce que** l'ajustement dans la zone du bord ou sur toute la section transversale est en forme de segment de cercle, de préférence avec une profondeur de 0,3 à 1,5 mm soit 2 à 12 % du diamètre extérieur du tube, de préférence de 0,6 à 1 mm ou soit 5 à 8 % du diamètre extérieur du tube.

9. Echangeur thermique selon l'une des revendications précédentes, **caractérisé en ce que** l'ajustement (33) comprend ou est une surface plane, dont la rugosité moyenne sur une plage Ra est réglée de 0,05 à 2,0 µm, de préférence de 0,1 à 1 µm.

10. Echangeur thermique selon l'une des revendications précédentes, **caractérisé en ce que** le rapport Apr/A_{wi} se situe dans une plage allant de 0,4 à 0,6.

11. Echangeur thermique selon l'une des revendications précédentes, **caractérisé en ce que** le tube (2) est en liaison active de façon méandreuse avec la surface d'échange thermique intérieure A_{wi} (21) ou/ et avec l'élément de plaque (4).

12. Echangeur thermique selon l'une des revendications précédentes, **caractérisé en ce que** le rapport GL/A_{wi} se situe dans une plage comprise entre 0,9 et 1,8.

13. Echangeur thermique selon l'une des revendications précédentes, **caractérisé en ce qu'**une dimension X de l'élément de plaque parallèlement à l'axe de tube dans la zone de la zone de contact de l'élément de plaque est supérieure à une dimension Y dans une zone plus éloignée du tube (2).

14. Echangeur thermique selon l'une des revendications précédentes, **caractérisé en ce que** le tube (2) est en liaison active avec l'élément de plaque parallèlement à une direction longitudinale L de l'élément de plaque (4), ou de préférence transversalement, de façon particulièrement préférée essentiellement à angle droit par rapport au sens longitudinal L.

15. Echangeur thermique selon l'une des revendications précédentes, **caractérisé en ce que** l'élément de plaque (4) présente des trous oblongs (6) alignés perpendiculairement à l'axe du tube.

16. Echangeur thermique selon l'une des revendications 6 à 15, **caractérisé en ce que** les trous de la paroi avant (10) chevauchent au moins partiellement les trous de l'élément de plaque (4).

17. Echangeur thermique selon l'une des revendications précédentes, **caractérisé en ce que** le tube (2) est installé sur deux éléments de plaque (4) agencés latéralement.
